# EUROPÄISCHE PATENTSCHRIFT

(11) **EP 0 606 542 B1**
(45) Veröffentlichungstag und Bekanntmachung des Hinweises auf die Patenterteilung: **05.03.1997**
(21) Anmeldenummer: 93117116.9
(22) Anmeldetag: 22.10.1993
(51) Int. Cl.: B32B 7/04, G09F 3/02, G09F 3/10

(54) **Etikett und Verfahren zu dessen Herstellung**
Label and method for manufacturing the same
Etiquette et procédé pour sa fabrication

(30) Priorität: 09.01.1993 DE 4300411
(43) Veröffentlichungstag der Anmeldung: 20.07.1994
(73) Patentinhaber: ESSELTE METO INTERNATIONAL PRODUKTIONS GMBH, D-69434 Hirschhorn (DE)
(72) Erfinder: Bausewein, Volker, D-64757 Rothenberg (DE); Ludebühl, Dieter, D-Rothenberg (DE)

(56) Entgegenhaltungen:
- EP-A- 0 295 028
- FR-A- 1 584 869
- US-A- 3 995 087
- US-A- 5 019 436
- US-A- 5 079 058

## Beschreibung

Die Erfindung bezieht sich auf ein Etikett gemäß dem Oberbegriff des Anspruchs 1. Die Erfindung bezieht sich weiterhin auf ein Verfahren zur Herstellung des Etikettes.

Etiketten der eingangs beschriebenen Art sind aus dem Stand der Technik allgemein bekannt. Das die Haftwirkung ausübende Schichtmaterial besteht hierbei meist aus einer einfachen Klebeschicht. Sollen derartige Etiketten von etikettierten Waren wieder entfernt werden, die wie bspw. Waren aus Glas oder aus Porzellan auf die Klebeschicht eine bessere Haftwirkung ausüben als der Aufzeichnungsträger, bleiben auf den Waren Klebstoffreste zurück, die von den Waren nur schwer abzuwaschen sind. Um Klebstoffrückstände zu vermeiden, wurde zunächst versucht, ein aus zwei Klebstoffschichten bestehendes Schichtmaterial zu verwenden, wobei für die an dem Aufzeichnungsträger anliegende erste Klebeschicht ein Klebstoff mit einer sehr große Haftwirkung gewählt wurde, wohingegen die der Trägerfolie bzw. den zu etikettierenden Waren zugewandte zweite Klebeschicht auf Grund dem Klebstoff beigemengter Weichmacher nur eine geringe Haftkraft hatte. Die Verwendung dieser doppelten Klebeschicht hatte zunächst die positive Wirkung, daß die Etiketten gut auf den etikettierten Waren hafteten und dennoch ohne Klebstoffrückstände von den etikettierten Waren wieder abgelöst werden konnten. Mit der Zeit drang jedoch der der zweiten Klebeschicht beigemengte Weichmacher in die erste Klebeschicht mit der ursprünglich großen Haftkraft ein, so daß deren Haftwirkung nachließ und auch die doppelte Klebeschicht beim Ablösen der Etiketten eher auf der Ware als auf den Etiketten zurückblieb.

Aus der US-PS 5,079,058 ist ein aus mehreren Schichten bestehendes Etikett bekannt geworden. Ein derartiges Etikett setzt sich aus den folgenden Schichten zusammen: einer lösbaren Trägerschicht, einer druckempfindlichen Klebeschicht zum permanenten Befestigen des Etiketts auf einem Gegenstand, einer Basisschicht, einer Filmschicht, die vorzugsweise aus einem magnetischen Puder besteht, und einer pigmentierten Druckschicht. Basisschicht, Filmschicht und Druckschicht werden über Klebeschichten permanent zusammengehalten.

Aufgabe der vorliegenden Erfindung ist es, ein Etikett und ein Verfahren zur Herstellung eines derartigen Etiketts zu schaffen, das über seine Klebeschicht gut auf zu etikettierenden Waren haftet und das nach dem Abziehen auf den Waren keine Klebstoffreste zurückläßt.

Die Aufgabe wird hinsichtlich des Etiketts durch die Merkmale des kennzeichnenden Teils des Anspruchs 1 gelöst. Hinsichtlich des Verfahrens wird die Aufgabe durch die Merkmale des Anspruchs 7 gelöst.

Ein von der Trägerfolie abgelöstes und auf zu etikettierende Waren aufgeklebtes Etikett läßt sich von den Waren auch dann abziehen, ohne Klebstoffrückstände zu hinterlassen, wenn die Waren auf den Klebstoff eine größere Haftkraft als der Aufzeichnungsträger des Etikettes ausüben, da sich hierbei zwischen dem Etikett und der Ware eine Zwischenlage befindet, die auf den Klebstoff eine größere Haftkraft als die zu etikettierende Ware ausübt und somit verhindert, daß Klebstoffrückstände auf der Ware zurückbleiben. Um zu bewirken, daß die Zwischenlage auf dem Aufzeichnungsträger und nicht auf der Ware haften bleibt, wenn das Etikett von der Ware abgezogen wird, ist der Aufzeichnungsträger auf der Zwischenlage mittels eines Klebstoffes fixiert, der eine größere Haftkraft als derjenige Klebstoff hat, mit dem die Zwischenlage auf der Trägerfolie, bzw. auf der Ware haftet. Zudem verhindert die Zwischenlage, daß die dem Klebstoff mit der geringen Haftkraft beigemengten Weichmacher in den Klebstoff mit der besseren Haftwirkung eindringen und somit bewirken, daß der letztere Klebstoff Haftkraft einbüßt.

Das erfindungsgemäße Etikett läßt sich auf preisgünstige Weise herstellen, wenn die Zwischenlage aus Pergamipapier oder aus Hochglanzpapier besteht oder wenn die Zwischenlage als Polyethylenfolie oder als Aluminiumfolie ausgebildet ist. Diese Materialien üben auf Klebstoff meist eine größere Haftkraft als die zu etikettierenden Waren aus.

Die Verwendung des erfindungsgemäßen Schichtmaterials ermöglicht vor allem die Herstellung von Diebstahlsicherungsetiketten, bei denen auf den bedruckbaren Aufzeichnungsträgers in Richtung der Zwischenlage eine Nickelfolie, eine Polyesterfolie und eine dünne auf die Polyesterfolie aufgesputterte Schicht aus weichmagnetischem Material aufgetragen sind. Aufgesputterte Schichten aus weichmagnetischem Material üben auf als Haftkleber ausgebildete Klebstoffe eine derart geringe Haftwirkung aus, daß Diebstahlsicherungsetiketten, die aus den beschriebenen Schichten bestehen und die über die aufgesputterte Schicht direkt auf zu etikettierenden Waren geklebt werden, mit großer Wahrscheinlichkeit Klebstoffreste zurücklassen, wenn sie von den Waren wieder abgezogen werden. Wegen der minimalen Haftwirkung aufgesputterter Schichten auf Haftkleber müßte zudem ein Klebstoff mit einer sehr großen Haftkraft verwendet werden, damit die Diebstahlsicherungsetiketten auf den etikettierten Waren überhaupt haften bleiben. Wird ein derartiges Diebstahlsicherungsetikett von den Waren wieder entfernt, bleiben Reste dieses aggressiven Klebstoffes auf den Waren zurück, die nur mit größter Mühe davon wieder entfernt werden können. Gemäß der Erfindung wird die gesputterte Schicht des Diebstahlsicherungsetikettes mittels eines aggressiven Klebstoffes auf die Zwischenlage geklebt, die mittels eines Klebstoffes mit geringerer Haftkraft auf der Trägerfolie, bzw. auf zu etikettierenden Waren aufgebracht wird, so daß das Diebstahlsicherungsetikett gut auf der zu etikettierenden Ware haftet und leicht davon wieder abgezogen werden kann, ohne Klebstoffrückstände zu hinterlassen.

Etiketten mit den erfindungsgemäßen Eigenschaften lassen sich preisgünstig herstellen, wenn ein Ausgangsschichtmaterial bereitgestellt wird, das aus einer beidseitig mit Silikon beschichteten Trägerfolie besteht, auf der eine beidseitig mit Klebstoff versehene Zwischenlage aufgebracht ist, wobei der Klebstoff, der auf der der Trägerfolie zugewandten Seite der Zwischenlage aufgetragen ist, eine geringere Haftwirkung hat als der Klebstoff, der sich auf der der Trägerfolie abgewandten Seite der Zwischenlage befindet, wenn auf der der Trägerfolie abgewandten Seite des Ausgangsschichtmaterials ein bedruckbarer Aufzeichnungsträger aufgeklebt wird und wenn das hierbei hergestellte Zwischenprodukt zur weiteren Verarbeitung auf eine Aufwickelrolle aufgewickelt wird.

Das erfindungsgemäße Verfahren erlaubt vor allem die Herstellung von Diebstahlsicherungsetiketten, bei denen auf den Aufzeichnungsträger eine Nickelfolie und hierauf eine Polyesterfolie aufgebracht werden, auf deren dem Aufzeichnungsträger abgewandten Seite eine dünne Schicht aus weichmagnetischem Material aufgesputtert ist, bevor der Aufzeichnungsträger über die Nickelfolie, die Polyesterfolie und den Sputterfilm auf das Ausgangsschichtmaterial geklebt wird. Auf diese Weise lassen sich Diebstahlsicherungsetiketten herstellen, die trotz der geringen Haftkraft des Sputterfilmes auf Klebstoff gut auf zu etikettierenden Waren haften und leicht davon wieder abgezogen werden können, ohne Klebstoffrückstände zu hinterlassen.

Einige Ausführungsbeispiele der Erfindung werden im folgenden anhand der Figuren näher erläutert. Es zeigen
Fig. 1 einen Schnitt durch ein herkömmliches Etikett, auf dem das erfindungsgemäße Schichtmaterial aufgebracht ist,
Fig. 2 einen Schnitt durch ein mit dem Schichtmaterial versehenes Diebstahlsicherungsetikett,
Fig. 3 eine schematiche Darstellung einer Vorrichtung zur Herstellung der erfindungsgemäßen Etiketten.

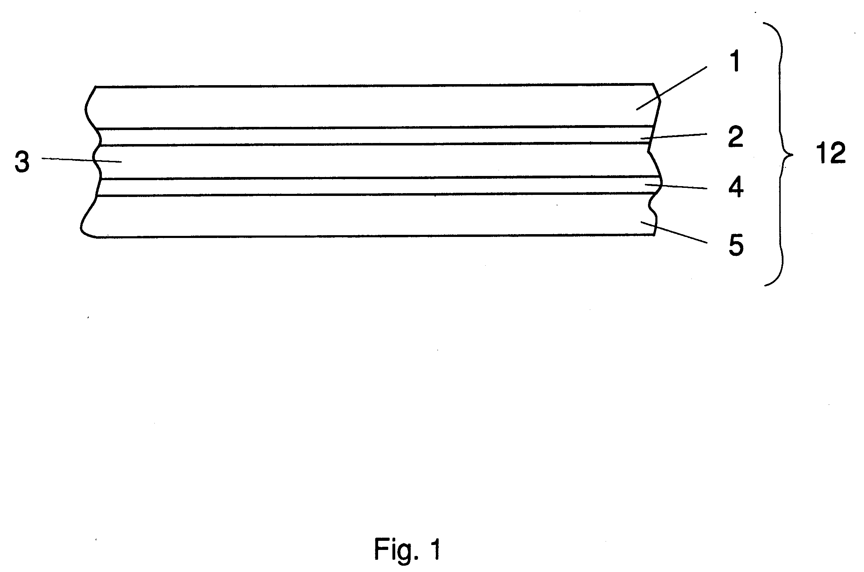

Fig. 1 zeigt ein Etikett im Schnitt, das einen bedruckbaren Aufzeichnungsträger 1 aufweist, der aus herkömmlichem Etikettenpapier bestehen kann, das mittels eines eingefärbten Druckstockes bedruckbar ist, der aber auch aus temperaturempfindlichem Etikettenpapier bestehen kann, das mit Hilfe eines Thermodruckkopfes beschreibbar ist. Weiterhin kann der Aufzeichnungsträger 1 als Folie aus mechanisch bedruckbarem Kunststoff ausgebildet sein, wofür sich insb. Polypropylen eignet.

Mit Hilfe von als Haftkleber ausgebildetem Klebstoff 2 mit einer großen Haftkraft ist der Aufzeichnungsträger 1 auf einer Zwischenlage 3 aufgebracht, die aus einem Material besteht, das auf Haftkleber eine große Haftwirkung ausübt. Die Zwischenlage 3 ist mit Hilfe eines ebenfalls als Haftkleber ausgebildeten Klebstoffes 4 mit einer relativ geringen Haftkraft auf eine Trägerfolie 5 geklebt.

Die Zwischenlage 3 kann als Pergaminpapier, als Hochglanzpapier, als Polyethylenfolie oder als Aluminiumfolie ausgebildet sein. Diese als Zwischenlage dienenden Materialien üben auf Haftkleber allgemein eine große Haftwirkung aus. Die Trägerfolie 5 ist zumindest auf der dem Aufzeichnungsträger 1 zugewandten Seite mit Silikon beschichtet, das auf Haftkleber eine geringe Haftkraft ausübt, so daß die Trägerfolie 5 leicht von der Zwischenlage 3 abgezogen werden kann, bevor das Etikett mittels des Klebstoffes 4 auf zu etikettierende Waren geklebt wird.

Die Trägerfolie 5 kann auch beiseitig mit Silikon beschichtet sein. Wird zur Schaffung eines Ausgangsschichtmateriales die mit Klebstoff 2, 4 beschichtete Zwischenlage 3 gemeinsam mit der beidseitig silikonisierten Trägerfolie 5 aufgerollt, kommt die Klebstoffschicht 2 auf der der Zwischenlage 3 abgewandten Seite der Trägerfolie 5 zu liegen. Beim Abrollen des Ausgangsschichtmateriales 2, 3, 4, 5 bleibt die Trägerfolie 5 dennoch nicht auf der Zwischenlage 3 mittels des Klebstoffes 2 haften, da die sich hierbei auch auf der der Zwischenlage 3 abgewandten Seite der Trägerfolie 5 befindliche Silikonschicht auf den Klebstoff 2 eine minimale Haftwirkung ausübt.

Bevor das erfindungsgemäße Etikett 1 bis 5 auf eine Ware aufgeklebt wird, wird die Trägerfolie 5 hiervon abgezogen. Wird das auf der Ware aufgebrachte Etikett wieder von der Ware entfernt, übt die Zwischenlage 3 auf den Klebstoff 4 eine sehr viel größere Haftkraft aus, als die Ware. Hierdurch ist sichergestellt, daß der gesamte Klebstoff 4 auf der Zwischenlage 3 haften bleibt und keine Klebstoffreste auf der Ware zurückbleiben.

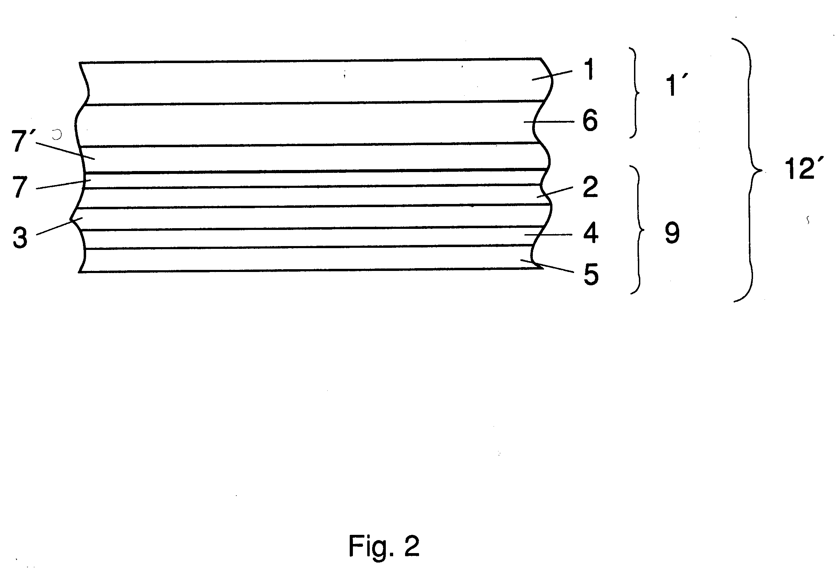

Zur Herstellung der in Fig. 2 dargestellten Diebstahlsicherungsetiketten wird dasselbe aus der Trägerfolie 5, dem Klebstoff 4 mit geringer Haftkraft, der Zwischenlage 3 und dem Klebstoff 2 mit großer Haftkraft bestehende Ausgangsschichtmaterial wie bei der Herstellung der in Fig. 1 dargestellten herkömmlichen Etiketten verwendet. Das Diebstahlsicherungsetikett besteht weiterhin aus einem bedruckbaren Aufzeichnungsträger 1, auf dessen dem Ausgangsschichtmaterial 2, 3, 4, 5 zugewandten Seite eine Nickelfolie 6 aufgebracht ist. Diese weist auf der dem Ausgangsschichtmaterial 2, 3, 4, 5 zugewandten Seite eine Polyesterfolie 7' mit einer aufgesputterten, dünnen Schicht 7 aus einem weichmagnetischen Material auf.

Das Etikett 1, 2, 3, 4, 6, 7, 7' wird zunächst von der Trägerfolie 5 getrennt, bevor es auf eine zu etikettierende Ware geklebt wird. Wird das Etikett wieder von der Ware abgelöst, bleibt wegen der relativ großen Haftkraft der Zwischenlage 3 auf Haftkleber der Klebstoff 4 auf der Zwischenlage 3 und nicht auf der Ware haften. Trotz der minimalen Haftwirkung von gesputterten Schichten auf Klebstoff bleibt hierbei die Zwischenlage 3 auf der gesputterten Schicht 7 haften, da der Klebstoff 2 eine hierfür ausreichende Haftkraft aufweist.

Wird eine mit dem Diebstahlsicherungsetikett gemäß Fig. 2 versehene Ware gestohlen und durch ein aus Sende- und Empfängerspule bestehendes Gatter getragen, wird das Etikett von der Sendespule mit einem elektromagnetischen Wechselfeld angestrahlt, das bewirkt, daß der weichmagnetische Sputterfilm 7 mit der Frequenz des Wechselfeldes ummagnetisiert wird und deshalb seinerseits ein elektromagnetisches Wechselfeld abstrahlt. Wird ein derartiges Feld von der Empfängerspule empfangen, wird Diebstahlalarm ausgelöst. Wird die Ware bezahlt, wird hierbei die Nickelfolie 6, die hartmagnetische Eigenschaften aufweist, mittels eines starken Magneten derart magnetisiert, daß die Nickelfolie 6 ihrerseits den weichmagnetischen Sputterfilm 7 in die magnetische Sättigung treibt, so daß der Sputterfilm 7 auf elektromagnetische Wechselfelder nicht mehr auf obige Weise reagieren kann, also deaktiviert ist. Die Ware mit dem deaktivierten Diebtahlsicherungsetikett kann nun durch das Gatter getragen werden, ohne daß ein Alarm ausgelöst wird.

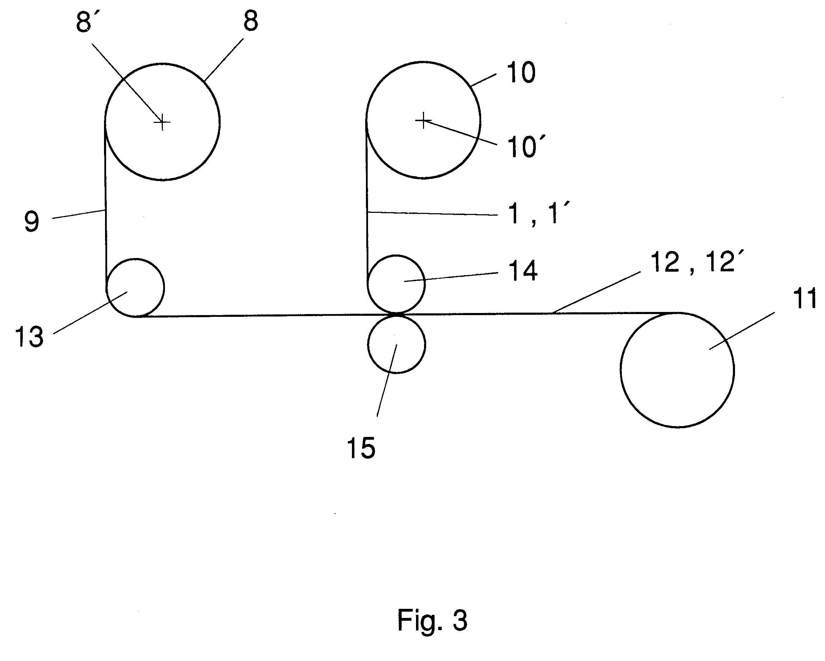

Die in Fig. 3 schematisch dargestellte Vorrichtung zur Herstellung von Etiketten besteht im wesentlichen aus einer 1. Vorratsrolle 8, auf der das Ausgangsschichtmaterial 9 (2, 3, 4, 5) derart aufgewickelt ist, daß die Klebstoffschicht 2 auf der der Drehachse 8' der ersten Vorratsrolle 8 zugewandten Seite der Zwischenlage 3 zu liegen kommt, aus einer zweiten Vorratsrolle 10 für den bedruckbaren Aufzeichnungsträger 1, der gegebenenfalls eine zusätzliche Nickelfolie 6 und eine Polyesterfolie 7' mit einem Sputterfilm 7 aufweist und damit den elektromagnetisch aktiven Teil 1' eines Diebstahlsicherungsetikettes ergibt, der derart auf der zweiten Vorratsrolle 10 aufgewickelt ist, daß der Sputterfilm 7 auf der der Drehachse 10' der zweiten Vorratsrolle 10 abgewandten Seite der Papierschicht 1 liegt, und aus einer Aufwickelrolle 11, auf die die in den Fig. 1 und 2 im Schnitt dargestellten Zwischenprodukte 12, 12' aufgerollt werden, um zur weiteren Verarbeitung bspw. einer Etikettenstanze zugeführt zu werden.

Bei der Herstellung der Etiketten wird das Ausgangsschichtmaterial 9 von der ersten Vorratsrolle 8 abgewickelt und über eine erste Umlenkrolle 13 einem Rollenpaar 14, 15 mit parallel zueinander und senkrecht zur Bewegungsrichtung des Ausgangsschichtmateriales 9 liegenden Rollenachsen zugeführt, das den Aufzeichnungsträger 1, 1' auf das Ausgangsschichtmaterial 9 preßt, wodurch der Aufzeichnungsträger 1, bzw. der Sputterfilm 7 des elektromagnetisch aktiven Teiles 1' mittels der Klebstoffschicht 2 auf das Ausgangsschichtmaterial 9 geklebt wird. Das sich hierdurch ergebende Zwischenprodukt 12, 12' wird auf die Aufwickelrolle 11 gewickelt, die einer Etikettenstanze zur weiteren Verarbeitung des Zwischenproduktes zugeführt werden kann.

## Patentansprüche

1. Etikett zum Aufkleben auf eine Ware, insbesondere zur Preisauszeichnung, bestehend aus einem bedruckbaren Aufzeichnungsträger (1), der über ein Haftwirkung ausübendes Schichtmaterial (2,3,4) auf eine Trägerfolie (5) geklebt ist, bei der zumindest die dem Schichtmaterial zugewandte Seite mit Silikon beschichtet ist und wobei das Schichtmaterial (2,3,4) aus einer beidseitig mit Klebstoff (2,4) beschichteten Zwischenlage (3) besteht,
dadurch gekennzeichnet,
daß der Klebstoff (4), der auf der der Trägerfolie (5) zugewandten Seite der Zwischenlage (3) aufgetragen ist, eine geringere Haftwirkung hat als der Klebstoff (2), der auf der dem Aufzeichnungsträger (1) zugewandten Seite der Zwischenlage (3) aufgetragen ist,
daß die Zwischenlage (3) derart ausgebildet ist, daß sie auf Klebstoff (2,4) eine größere Haftkraft als die mit dem Etikett zu versehende Ware ausübt und
daß sie verhindert, daß die dem Klebstoff (4) mit der geringen Haftkraft beigemengten Weichmacher in den Klebstoff (2) mit der besseren Haftwirkung eindringen.

2. Etikett nach Anspruch 1, **dadurch gekennzeichnet**, daß die Zwischenlage (3) aus Pergaminpapier besteht.

3. Etikett nach Anspruch 1, **dadurch gekennzeichnet**, daß die Zwischenlage (3) aus Hochglanzpapier besteht.

4. Etikett nach Anspruch 1, **dadurch gekennzeichnet**, daß die Zwischenlage (3) als Polyethylenfolie ausgebildet ist.

5. Etikett nach Anspruch 1, **dadurch gekennzeichnet**, daß die Zwischenlage (3) als Aluminiumfolie ausgebildet ist.

6. Etikett nach einem der Ansprüche 1 bis 5, **dadurch gekennzeichnet**, daß auf den bedruckbaren Aufzeichnungsträgers (1) in Richtung der Zwischenlage (3) eine Nickelfolie (6), eine Polyesterfolie (7') und eine dünne auf die Polyesterfolie (7') aufgesputterte Schicht (7) aus weichmagnetischem Material aufgetragen sind.

7. Verfahren zur Herstellung von Etiketten, die insbesondere zur Preisauszeichnung auf eine Ware aufgeklebt werden, gekennzeichnet durch folgende Verfahrensschritte:
a) ein Ausgangsschichtmaterial wird bereitgestellt, das aus einer beidseitig mit Silikon beschichteten Trägerfolie (5) besteht,
b) eine beidseitig mit Klebstoff (2,4) versehene Zwischenlage (3) wird aufgebracht, wobei der Klebstoff (4), der auf der Trägerfolie (5) zugewandten Seite der Zwischenlage (3) aufgebracht ist, eine geringere Haftwirkung hat als der Klebstoff (2), der sich auf der der Trägerfolie (5) abgewandten Seite der Zwischenlage (3) befindet, und wobei die Zwischenlage (3) auf Klebstoff eine größere Haftwirkung als die mit dem Etikett zu versehende Ware ausübt und verhindert, daß die dem Klebstoff (4) mit der geringen Haftkraft beigemengten Weichmacher in den Klebstoff (2) mit der besseren Haftwirkung eindringen,
c) auf die der Trägerfolie (5) abgewandten Seite des Ausgangsschichtmaterials (2,3,4,5) wird ein bedruckbarer Aufzeichnungsträger (1) aufgeklebt,
d) das im Verfahrensschritt c) hergestellte Zwischenprodukt (12) wird zur weiteren Verarbeitung auf eine Aufwickelrolle (11) aufgewickelt.

8. Verfahren zur Herstellung von Etiketten nach Anspruch 7, **dadurch gekennzeichnet**, daß auf den Aufzeichnungsträger (1) eine Nickelfolle (6) und hierauf eine Polyesterfolie (7') aufgebracht werden, auf deren dem Aufzeichnungsträger (1) abgewandten Seite eine dünne Schicht (7) aus weichmagnetischem Material aufgesputtert ist, bevor der Aufzeichnungsträger (1) über die Nickelfolie (6) , die Polyesterfolie (7') und den Sputterfilm (7) auf das Ausgangsschichtmaterial (2, 3, 4, 5) geklebt wird.

## Claims

1. A label for being adhered to an article of merchandise, in particular for price marking purposes, comprising a recording medium (1) adapted to receive a printed image and being adhered to a foil of supporting material (5) through the intermediary of a composite material (2, 3, 4) exerting an adhesive force, in which at least the side of the supporting foil close to the composite material is coated with silicone, and in which the composite material (2, 3, 4) is comprised of an intermediate layer (3) having both of its sides coated with an adhesive material (2, 4),
**characterized in that** the adhesive material (4) applied to the side of the intermediate layer (3) close to the supporting foil (5) exerts a lower adhesive force than the adhesive material (2) applied to the side of the intermediate layer (3) close to the recording medium (1), that the intermediate layer (3) is configured such as to exert on the adhesive material (2, 4) a higher adhesive force than the article of merchandise on which the label is to be applied, and that it prevents the softening agents admixed to the adhesive material (4) with the lower adhesive force from entering the adhesive material (2) with the greater adhesive force.

2. The label as claimed in claim 1, **characterized in that** the intermediate layer (3) is made of glassine paper.

3. The label as claimed in claim 1, **characterized in that** the intermediate layer (3) is made of high-gloss paper.

4. The label as claimed in claim 1, **characterized in that** the intermediate layer (3) is fabricated from a polyethylene film material.

5. The label as claimed in claim 1, **characterized in that** the intermediate layer (3) is fabricated from an aluminum film material.

6. The label as claimed in any one of the claims 1 to 5, **characterized in that** in the direction of the intermediate layer (3) a nickel film (6), a polyester film (7'), and a thin coating (7) of a magnetically soft material sputtered onto the polyester film (7') are applied to the recording medium (1) adapted to receive a printed image.

7. A method of manufacturing labels for being adhered to an article of merchandise in particular for price marking purposes, **characterized in that** it comprises the steps of:
(a) providing a composite base material which is comprised of a supporting foil (5) having both of its sides coated with silicone;
(b) applying thereto an intermediate layer (3) provided with an adhesive material (2, 4) on both of its sides, with the adhesive material (4) applied to the side of the intermediate layer (3) close to the supporting foil (5) exerting a lower adhesive force than the adhesive material (2) applied to the side of the intermediate layer (3) remote from the supporting foil (5), with the intermediate layer (3) exerting on adhesive a greater adhesive force than the article of merchandise to which the label is to be applied, and preventing the softening agents admixed to the adhesive (4) with the lower adhesive force from entering the adhesive (2) with the greater adhesive force;
(c) adhering a recording medium (1) adapted to receive a printed image to the side of the composite base material (2, 3, 4, 5) remote from the supporting foil (5); and
(d) winding the intermediate product (12) manufactured in step (c) onto a take-up spool (11) for further processing.

8. The method of manufacturing labels according to claim 7, **characterized in that** a nickel film (6) coated with a polyester film (7') is applied to the recording medium (1), with a thin coating (7) of a magnetically soft material being sputtered onto the side of the polyester film remote from the recording medium (1) prior to adhering the recording medium (1) to the composite base material (2, 3, 4, 5) through the intermediary of the nickel film (6), the polyester film (7'), and the sputter film (7).

## Revendications

1. Etiquette destinée à être collée sur une marchandise, notamment pour marquer et afficher les prix, comprenant un moyen d'enregistrement (1) susceptible d'être imprimé qui est collé sur une feuille support (5) par l'intermédiaire d'une matière composée (2, 3, 4) exerçant une force d'adhérence, au moins le côté de ladite feuille support près de ladite matière composée étant enduit de silicone, et ladite matière composée (2, 3, 4) comprenant une couche intermédiaire (3) enduit des deux côtés d'une matière adhésive (2, 4), **caractérisée en ce que** ladite matière adhésive (4) déposée sur le côté de ladite couche intermédiaire (3) près de ladite feuille support (5) exerce une force d'adhérence qui est inférieure à celle de ladite matière adhésive (2) déposée sur le côté de ladite couche intermédiaire (3) près dudit moyen d'enregistrement (1),
en ce que ladite couche intermédiaire (3) est réalisée en sorte qu'elle exerce sur ladite matière adhésive (2, 4) une force d'adhérence qui est supérieure à celle de la marchandise sur laquelle l'étiquette est destinée à être appliquée,
et en ce qu'elle empêche la pénétration des plastifiants ajoutés à ladite matière adhésive (4) ayant la force d'adhérence inférieure dans ladite matière adhésive (2) ayant la force d'adhérence supérieure.

2. Etiquette selon la revendication 1, **caractérisée en ce que** la couche intermédiaire (3) est composée de papier cristal.

3. Etiquette selon la revendication 1, **caractérisée en ce que** la couche intermédiaire (3) est composée de papier glacé.

4. Etiquette selon la revendication 1, **caractérisée en ce que** la couche intermédiaire (3) est réalisée sous forme d'une feuille de polyéthylène.

5. Etiquette selon la revendication 1, **caractérisée en ce que** la couche intermédiaire (3) est réalisée sous forme d'une feuille d'aluminium.

6. Etiquette selon l'une quelconque des revendications 1 à 5, **caractérisée en ce qu**'une feuille de nickel (6), une feuille de polyester (7') et un mince film (7) en matériau magnétique doux déposé par métallisation sous vide sur ladite feuille de polyester (7') sont appliqués sur ledit moyen d'enregistrement (1) susceptible d'être imprimé dans la direction de ladite couche intermédiaire (3).

7. Méthode pour la fabrication d'étiquettes destinées à être collées sur une marchandise, notamment pour marquer et afficher les prix, **caractérisée en ce qu**'elle comporte les cycles opératoires suivants:
a) préparer une matière composée de base comportant une feuille support (5) enduit de silicone des deux côtés;
b) appliquer une couche intermédiaire (3) sur laquelle une matière adhésive (2, 4) est déposée des deux côtés, ladite matière adhésive (4) déposée sur le côté de ladite couche intermédiaire (3) près de ladite feuille support (5) ayant une force d'adhérence qui est inférieure à celle de ladite matière adhésive (2) déposée sur le côté de ladite couche intermédiaire (3) éloigné de ladite feuille support (5), et ladite couche intermédiaire (3) exerçant sur ladite matière adhésive une force d'adhérence qui est supérieure à celle de la marchandise sur laquelle l'étiquette est destinée à être appliquée et empêchant la pénétration des plastifiants ajoutés à ladite matière adhésive (4) ayant la force d'adhérence inférieure dans ladite matière adhésive (2) ayant la force d' adhérence supérieure;
c) adhérer un moyen d'enregistrement (1) susceptible d'être imprimé sur le côté de ladite matière composée de base (2, 3, 4, 5) éloigné de ladite feuille support (5);
d) enrouler le produit intermédiaire (12) fabriqué en cycle opératoire (C) sur une bobine à enrouler (11) pour la transformation ultérieure.

8. Méthode pour la fabrication d'étiquettes selon la revendication 7, **caractérisée en ce qu**'une feuille de nickel (6) munie d'une feuille de polyester (7') est appliquée sur le moyen d'enregistrement (1), le côté de ladite feuille de polyester éloigné dudit moyen d'enregistrement (1) étant muni d'un mince film (7) en matériau magnétique doux déposé par métallisation sous vide, avant d'adhérer ledit moyen d'enregistrement (1) sur ladite matière composée de base (2, 3, 4, 5) par l'intermédiaire de ladite feuille de nickel (6), de ladite feuille de polyester (7') et dudit film (7) déposé par métallisation sous vide.
